# EUROPEAN PATENT SPECIFICATION

(11) **EP 4 281 842 B1**
(45) Date of publication and mention of the grant of the patent: **16.10.2024**
(21) Application number: 22702748.9
(22) Date of filing: 20.01.2022
(51) Int. Cl.: G06F 3/01, A63F 13/285, A63F 13/218, A63F 13/24

(54) **METHOD AND ARRANGEMENT FOR PRODUCING HAPTIC EFFECTS IN A USER DEVICE**
VERFAHREN UND ANORDNUNG ZUR ERZEUGUNG HAPTISCHER EFFEKTE IN EINER BENUTZERVORRICHTUNG
PROCÉDÉ ET AGENCEMENT POUR PRODUIRE DES EFFETS HAPTIQUES DANS UN DISPOSITIF UTILISATEUR

(30) Priority: 25.01.2021 FI 20215082; 29.01.2021 FI 20215101
(43) Date of publication of application: 29.11.2023
(73) Proprietor: PS Audio Design Oy, 90590 Oulu (FI)
(72) Inventor: TIMLIN, Tomi, 90630 Oulu (FI); YLIMÄKI, Miska, 90540 Oulu (FI)
(74) Representative: Papula Oy
(86) International application number: PCT/FI2022/050033
(87) International publication number: WO 2022/157416

(56) References cited:
- EP-A2- 3 208 693
- US-A1- 2016 284 497
- US-A1- 2020 379 515

## Description

### FIELD OF THE INVENTION

The invention is generally related to the field of user devices that have haptic effects as a part of their user experience. The invention is particularly related to electrically operated transducers that can be used to make one or more surfaces of the user device convey the haptic effects to the user.

### BACKGROUND OF THE INVENTION

Haptics in general means the technology of using forces, vibrations, and/or motions to a user to generate an experience of touch. Haptics can be used in hand-held user devices as an effect that makes the user experience more versatile. For example, the hand-held controllers used as a part of the user interface of many video game devices may include means for producing haptic effects such as vibration. In particular, document EP 3 208 693 A2 discloses modular peripheral device assemblies in which a handheld controller is magnetically attachable (e.g., via permanent magnets and/or electromagnets) to an assembly base (or to another handheld controller) and in which a haptic effect is created with two magnets on the attached objects as the user is moving the objects relative to each other.

Cleverly designed haptic effects may be used to deceive the human sensory system so that the user believes to feel e.g. a macroscopic movement of a button under their finger, even if in reality there is only a relatively stable structure that undergoes a short, intensive, elastic deformation or vibration in a much smaller scale.

In order to have optimal applicability in hand-held user devices, an arrangement for producing haptic effects should be small in size, have a low energy consumption, allow for versatile ways in attaching to the other structures of the device, and preferably be possible to manufacture at low cost.

### SUMMARY

It is an objective to provide a method and an arrangement for producing haptic effects in user devices in an optimal way. Another objective is to enable producing haptic effects in such parts of a user device that are movably attached.

According to a first aspect there is provided an arrangement as defined in the appended independent claim 1 for producing haptic effects in a user

According to a second aspect there is provided a method as defined in the appended independent claim for producing haptic effects in a user device.

Preferred embodiments of the invention are defined in the appended dependent claims.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates an arrangement,
**Figure 2** illustrates a possible detail of the arrangement of fig. 1,
**Figure 3** illustrates the possible use of a separate detector,
**Figure 4** illustrates the possible use of a transducer also as a detector,
**Figure 5** illustrates a possible location of parts in an arrangement,
**Figure 6** illustrates another possible location of parts in an arrangement, and
**Figure 7** illustrates an arrangement according to an embodiment.

### DETAILED DESCRIPTION

Certain features are common to the transducers that are meant here and described as haptic transducers. The transducer comprises two parts, which may be called the first half and the second half. The use of the term "half" does not mean that said parts of the transducer should have mutually equal size, mass, diameter, height, or any other dimension. The term is used here only as an illustrative name to make unambiguous reference to the two main parts of a transducer. Other names like "first transducer part" and "second transducer part" could be used quite as well.

The transducers of the kind meant here comprise an arrangement of permanent magnets, of which at least a first permanent magnet is located in the first half and at least a second permanent magnet is located in the second half. The purpose of the permanent magnets is to create - possibly together with other parts of the transducer, like one or more surrounding cover parts made of magnetic material - a static magnetic force. The static magnetic force may be for example such that there are one or more balance positions, in which the first and second halves of the transducer are at a local minimum of magnetic potential energy.

Typically, the physical structure of the transducer is such that there is a natural direction of movement in which at least one of the first and second halves may move in relation to the other during operation. If the general outline of the transducer is that of a box or case with an essentially flat bottom and - parallel to it - a relatively flat top, the bottom may be generally defined by the first half and the top may be generally defined by the second half. In such a case, the direction of a symmetry axis that goes essentially perpendicularly through the bottom and top may be said natural direction of movement. One or more points along the natural direction of movement are then the balance positions referred to above.

Yet another feature common to the haptic transducers meant here is the provision of one or more coils in the transducer. At least one such coil is configured to create, under influence of an electric current through said coil, dynamic magnetic forces in the haptic transducer. Various options exist for placing the coil (s) in relation to the first and second halves of the transducer, as well as in relation to the permanent magnets that make up the arrangement of permanent magnets. Each such option may have its own advantages and disadvantages, but for the purposes of this description the location of the coil(s) - like the exact configuration of the arrangement of permanent magnets - has little significance.

The haptic effect produced by the transducer is the result of feeding an electric current of desired waveform to the coil(s). Under the combined influence of the dynamic magnetic forces created this way and the static magnetic forces intrinsic to the arrangement of permanent magnets, a relative movement arises between the first and second halves of the transducer. Attachments of the first and second halves of the transducer to further parts of the device that houses the transducer convey this relative movement further, so that eventually the user will feel the consequences of said relative movement using their senses. The user may sense said consequences of the relative movement either directly, by touching at least one of those parts of the user device to which at least one of the first and second halves is attached, or indirectly so that there are one or more further parts in between.

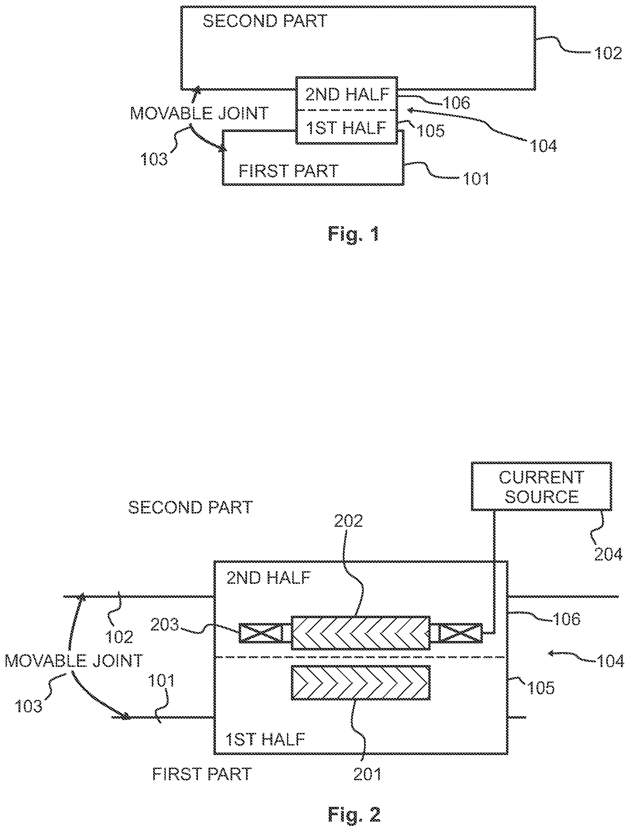

Fig. 1 illustrates schematically an arrangement for producing haptic effects in a user device. The arrangement comprises a first part 101 and a second part 102 of the user device. Of these, the second part 102 constitutes a hand-held body of the user device. This means that the second part 102 is of a size and shape that enables a human user to grab and hold by one or two hands. Typically, but not necessarily, the first part 101 is smaller than the second part 102 of the user device.

The arrangement shown in fig. 1 comprises a movable attachment 103, here called the movable joint, between the first and second parts 101 and 102 of the user device. The purpose of the movable attachment 103 is to allow a user of the user device to hold the second part 102 by hand and move the first part 101 in relation to the second part 102 during use of the user device. As an illustrative, non-limiting example one may imagine that the user device is a game controller that the user utilizes to play a video game. In such a case the second part 102 may be the hand-held body of the game controller, while the first part 101 may be a trigger, a joystick, a knob, or similar user interface feature that the user may manipulate by using one or more fingers.

The arrangement comprises a haptic transducer 104 for producing haptic effects for the user during said use of the user device. The haptic transducer 104 comprises a first half 105 and a second half 106. Also comprises in the haptic transducer, although not shown in fig. 1, is an arrangement of permanent magnets as already described above. At least a first permanent magnet is located in the first half 105 and at least a second permanent magnet is located in the second half 106. Also comprised (and located) in the haptic transducer 104 is at least one coil, which is configured to create, under influence of an electric current flowing through said coil, dynamic magnetic forces in the haptic transducer 104.

The first half 105 of the haptic transducer 105 is attached to the first part 101 of the user device, and the second half 106 is attached to the second half 102 of the user device. Thus, taken the movable attachment between the first and second parts 101 and 102 of the user device, the first half 105 of the haptic transducer 104 moves along with the first part 101 of the user device and the second half 106 of the haptic transducer 104 moves along with the second part 102 of the user device.

The attachments of the first half 105 to the first part 101 on one hand and the second half 106 to the second part 102 on the other hand means that the user may feel the haptic effects produced by the haptic transducer 104 in either one - or both - of the first and second parts 101 and 102. In line with the illustrative example above, if the user device is a game controller and the first part 101 is a trigger, the user may feel e.g. a vibrating effect and/or a sensory-system-deceiving feeling of movement while pulling the trigger.

Fig. 2 is a schematic illustration of certain more detailed parts of the arrangement according to an embodiment. The first and second halves 105 and 106 of the haptic transducer are shown, as are parts of the first and second parts 101 and 102 of the user device. The first permanent magnet 201 and the second permanent magnet 202, each located in their respective halves of the haptic transducer, both have the general outline of a relatively flat slab or pill. Polarities of the permanent magnets are schematically illustrated with hatching. In this embodiment the similarly named poles of the first and second permanent magnets face each other in the arrangement of permanent magnets. This has the natural consequence that one part of the resulting static magnetic forces is a repulsing force that tries to push the first half 105 of the haptic transducer away from the second half 106.

Other structures like cover parts of the haptic transducer may direct the magnetic fields so as to create a balancing, attractive magnetic force. As the magnitudes of both said repulsing force and said attractive force depend on distance, together they may give rise to one or more balance positions at which the net magnetic force in the direction of movement is zero. However, the repulsing force mentioned above may also be utilized as an addition to or a replacement of a return spring. In such an embodiment the magnetic repulsion between the similarly named magnetic poles of the permanent magnets pushes, in the absence of any intentional counteracting force caused by the user, the first part into a released position away from the second part. Such a functionality may be particularly useful if the first part 101 of the user device is a spring, joystick, knob, or other feature that should always return to a released position when the user is not actively operating it.

In the embodiment of fig. 2 the coil 203 has the shape of a relatively flat ring that encircles the second permanent magnet 202. Many other shapes are possible for the coil, as are many other locations in relation to the permanent magnets. As non-limiting examples, the coil may be stacked on top or below one or more of the permanent magnets, or the coil may be located in an opening in the center of a ring-shaped permanent magnet or ring-shaped set of several permanent magnets.

Another feature shown in the embodiment of fig. 2 is the provision of a current source 204 in the second part 102 of the user device. As the second part 102 constitutes a hand-held body of the user device, and is typically larger in size than the first part 101, placing the current source 204 in the second part may give more freedom in the structural design in the user device than trying to squeeze it in the first part 101. If the second part 102 is further connected to a larger apparatus, like if there is a power cord between the second part 102 and such a larger apparatus, the current source 204 may be considered conceptually as the route that the electric current takes through the second part 102 even if the actual, original source of the current would be further away. For simplicity of design, it is advantageous to have the coil 203 located in that half of the haptic transducer that is attached to the part of the user device housing the current source 204. This is not a necessary requirement, however, because various connector means can be utilized to power a coil even from a different part of the arrangement.

The movable attachment 103 between the first and second parts 101 and 102 of the user device is a swivel joint, a slide joint, or an elastically deforming joint. As already mentioned above, one possible reason for providing such a movable attachment may be to allow the user to utilize the first part 101 as a trigger to be pulled by a finger of the same hand that holds the second part 102.

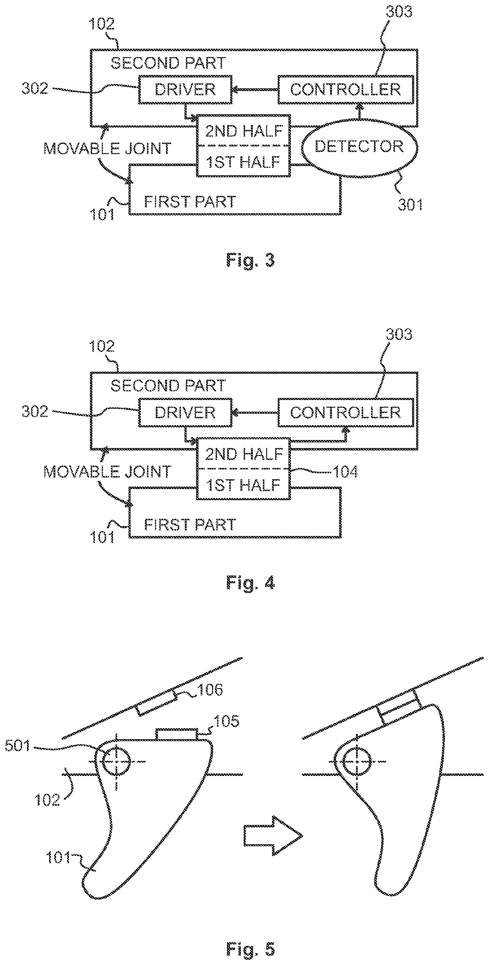

Fig. 3 shows an example of connections between some possible further parts of the arrangement. In the embodiment of fig. 3 the arrangement comprises a detector 301 that is configured to produce a detection signal in response to the user applying to the first part 101 a force for moving the first part 101 in relation to the second part 102. Also comprised in the arrangement, here in the second part 102, is a controllable driver circuit 302 for generating the electric current to the coil in response to a control signal. A controller 303 is coupled to said detector 301 and to said driver circuit 302. The controller 303 is configured to produce said control signal in response to receiving said detection signal.

The embodiment of fig. 3 involves the advantage that the controller 303, which may be a microprocessor or microcontroller for example, may time the production of haptic feedback to the user in an exact manner with reference to how the user operates the user device. Again referring to the trigger example, the detector 301 may inform the controller 303 about when, how far, and/or how fast the user pulls the trigger. The controller 303 may then instruct the driver to generate such a current that makes the user feel just the appropriate haptic feedback that should result from such operating of the trigger.

The detector 301 and the haptic transducer may be different elements of the user device, as suggested by drawing them separate in fig. 3. Fig. 4 illustrates another alternative, in which the haptic transducer 104 is configured to also operate as the detector. Such an embodiment may utilize for example the fact that a relative movement of the first and second parts of the user device, like pulling a trigger for example, results in a corresponding relative movement of the first and second halves of the haptic transducer 104. This, in turn, means a relative movement of at least one of the permanent magnets of the permanent magnet arrangement in relation to the coil, which may induce an electric current of detectable magnitude and direction in the coil. There may be an electric coupling between the coil and the controller for enabling the controller to detect a current induced into the coil. If the controller 303 has suitable means for detecting such a current, it may utilize it as the detection signal mentioned above.

Fig. 5 illustrates an example of a large class of possible embodiments in which the first part 101 is movable in relation to the second part 102 between a released position (shown on the left in fig. 5) and an operated position (shown on the right). In the released position the first and second halves 105 and 106 of the haptic transducer are located at a first distance from each other. In the operated position the first and second halves 105 and 106 of the haptic transducer are located at a second distance from each other. Of these, the second distance is smaller than the first distance. The idea here is that since it is more probable that the user should be given haptic feedback when operating the movable first part 101 than when not operating it, the actual operating position of the haptic transducer (i.e. the relative position of the first and second halves that facilitates effective production of a haptic effect) should come about in the operated position of the first part 101.

In the embodiment of fig. 5 the movement of the first part 101 in relation to the second part 102 is a swiveling movement around an axis 501. The same principle could be easily applied, however, with for example a linear movement in which the first part would slide along a pair of guides or rails.

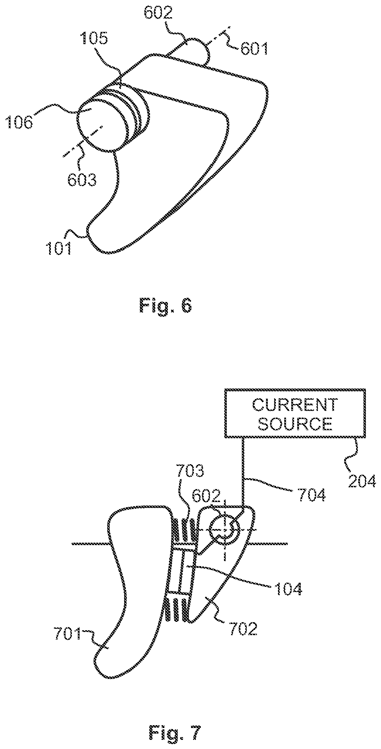

Fig. 6 illustrates another embodiment, in which the movable attachment is again a swivel joint. It is configured to allow the first part 101 to rotate around a swivel axis 601 with respect to the second part. The second part is not shown in fig. 6, but it is easy to understand how the swivel joint could be implemented by e.g. making a round shaft 602 in the first part 101 engage with a corresponding round hole or slot in the second part.

In the embodiment of fig. 6 the first and second halves 105 and 106 of the haptic transducer are rotationally symmetric about a common axis of symmetry 603. The term "rotationally symmetric" is used here in a wide sense, so that details that are not important to actual operation, like the location of the input and output wires that link the coil in the transducer to an external current source, are not taken into account. The first and second halves 105 and 106 of the haptic transducer are placed with their axis of symmetry 603 coincident with the swivel axis 601. This involves the advantage that the geometric factors affecting the operation of the haptic transducer do not change at all during operation. Thus haptic effects of all kinds can be produced irrespective of whether the user has operated the first part 101 and if so, to what extent.

Fig. 7 illustrates an embodiment in which the first part of the user device comprises a first sub-part 701 and a second sub-part 702. As described before, the haptic transducer 104 comprises a first half and a second half. As a difference to the other embodiments described above, the first half of the haptic transducer 104 is attached to the first sub-part 701 of the first part and the second half is attached to the second sub-part 702 of the first part.

The first and second sub-parts 701 and 702 are coupled to each other through suspension means 703. According to an embodiment, the suspension means 703 constitute elastic suspension means for making the first sub-part 701 move in relation to the second sub-part 702 under influence of the haptic effects produced by the haptic transducer 104. Another possibility is that the suspension means 703 constitute rigid suspension means for making the first sub-part 701 undergo elastic deformations under influence of the haptic effects produced by the haptic transducer 104. Thus the terms "elastic" and "rigid" are used here as relative definitions. Their meaning is to be interpreted by examining, whether the produced haptic effects involve primarily moving the whole first sub-part 701 in relation to the second sub-part 702 or whether they involve primarily (at least) the first sub-part 701 deforming elastically.

The suspension means 703 may involve elements that are elastic by form and/or material, like springs and/or solid pieces of elastomer materials. Additionally or alternatively, they may involve rigid attachment means such as glue, screws, rivets, welded seams or the like. In some embodiments they may involve joint means, such as swivel joints or sliding joints for example. In one embodiment the suspension means involve a joint located in one direction from the haptic transducer and a spring or other elastic member in another direction, so that the movement of the first sub-part caused by the haptic transducer has the nature of moving about said joint while tending to return to a relaxed position defined by the elastic member.

In the embodiment of fig. 7 it is possible to utilize a magnetic repulsion between the two halves of the haptic transducer 104 as a spring force. In other words, a first permanent magnet in the first half and a second permanent magnet in the second half of the haptic transducer 104 may have similarly named magnetic poles facing each other in the permanent magnet arrangement. A magnetic repulsion between said similarly named magnetic poles then pushes, in the absence of any intentional counteracting force caused by the user, the first sub-part 701 into a released position away from the second sub-part 702.

As the first part 101 is assumed to be relatively small in relation to the second part 102 of the user device, also in the embodiment of fig. 7 the current source 204 is part of the second part. A connection 704 exists for allowing the current generated in the current source 204 to flow into the coil in the haptic transducer 104. The connection 704 is advantageously built so that it does not impede the movement of the first part in relation to the second part. Fig. 7 shows schematically how the connection 704 goes through the swivel joint of which the shaft 602 is a part. Sliding connector rings or other known means could be used in such a solution. Other ways are possible, for example by using a loosely attached section of conductor wire that goes between the first and second parts, preferably in a suitably concealed location.

A class of embodiments, an example of which is schematically shown in fig. 7, may be generally described so that the arrangement for producing haptic effects in a user device comprises a first part of the user device and a second part of the user device, which second part constitutes a hand-held body of the user device. A movable attachment is provided between said first and second parts of the user device, for allowing a user of the user device to hold the second part by hand and move the first part in relation to the second part during use of the user device. In conformity with the other embodiments described earlier, the purpose of the haptic transducer comprised in the arrangement is to produce haptic effects for said user during said use of the user device. In this particular class of embodiments, said first part comprises a first sub-part and a second sub-part, and said haptic transducer comprises a first half and a second half. Of these, said first half is attached to said first sub-part of the first part and said second half is attached to said second sub-part of the first part.

One sub-class of said class of embodiments may have said first sub-part and said second sub-part coupled to each other through elastic suspension means for making the first sub-part move in relation to said second sub-part under influence of the haptic effects produced by said haptic transducer.

Another sub-class of said class of embodiments may have said first sub-part and said second sub-part are coupled to each other through rigid suspension means for making the first sub-part undergo elastic deformations under influence of the haptic effects produced by said haptic transducer.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. Arrangement for producing haptic effects in a user device, comprising:
- a first part of the user device,
- a second part of the user device, which second part constitutes a hand-held body of the user device
- a movable attachment between said first and second parts of the user device, for allowing a user of the user device to hold the second part by hand and move the first part in relation to the second part during use of the user device, wherein said movable attachment is a swivel joint, slide joint, or elastically deforming joint, and
- a haptic transducer for producing haptic effects for said user during said use of the user device;
wherein said haptic transducer comprises:
- a first half and a second half,
- an arrangement of permanent magnets, of which at least a first permanent magnet is located in said first half and at least a second permanent magnet is located in said second half, and
- at least one coil located in said haptic transducer and configured to create, under influence of an electric current flowing through said coil, dynamic magnetic forces in said haptic transducer;
wherein said first half is attached to said first part of the user device and said second half is attached to said second part of the user device;
and the arrangement comprises:
- a detector configured to produce a detection signal in response to the user applying to said first part a force for moving the first part in relation to the second part,
- a controllable driver circuit for generating said electric current to said coil in response to a control signal, and
- a controller coupled to said detector and to said driver circuit, said controller configured to produce said control signal in response to receiving said detection signal; and
**characterized in that** said movable attachment is a swivel joint, slide joint, or elastically deforming joint.

2. An arrangement according to claim 1,
wherein the second part of the user device comprises a current source for feeding said electric current into said at least one coil.

3. An arrangement according to any of claims 1 or 2, wherein said first and second parts and said movable attachment are configured to allow said user to utilize said first part as a trigger to be pulled by a finger of the same hand that holds the second part.

4. An arrangement according to any of the preceding claims, wherein said detector and said haptic transducer are different elements.

5. An arrangement according to any of claims 1 to 3, wherein said haptic transducer is configured to also operate as said detector.

6. An arrangement according to claim 5, comprising an electric coupling between said coil and said controller for enabling said controller to detect a current induced into said coil and to use such detected current as said detection signal.

7. An arrangement according to any of the preceding claims, wherein:
- said first part is movable in relation to said second part between a released position and an operated position,
- in said released position the first and second halves of the haptic transducer are located at a first distance from each other, and
- in said operated position said first and second halves of the haptic transducer are located at a second distance from each other, said second distance being smaller than said first distance.

8. An arrangement according to any of claims 1 to 6, wherein:
- said movable attachment is a swivel joint configured to allow said first part to rotate around a swivel axis with respect to said second part,
- said first and second halves of the haptic transducer are rotationally symmetric about a common axis of symmetry and placed with said axis of symmetry coincident with said swivel axis.

9. An arrangement according to any of the preceding claims, in which:
- the first permanent magnet and the second permanent magnet have similarly named magnetic poles facing each other in the permanent magnet arrangement, and
- a magnetic repulsion between said similarly named magnetic poles pushes, in the absence of any intentional counteracting force caused by the user, the first part into a released position away from the second part.

10. A method for producing haptic effects in a user device comprising a first part, a second part, which second part constitutes a hand-held body of the user device, and a movable attachment between said first and second parts of the user device for allowing a user of the user device to hold the second part by hand and move the first part in relation to the second part during use of the user device, the method comprising:
- responding to a detected predetermined way of a user moving the two parts of the user device relative to each other, by making a current flow through a coil of a haptic transducer of the user device, two halves of the haptic transducer being attached to respective ones of said two parts of the user device, so that said current creates dynamic magnetic forces that, together with static magnetic forces created by two permanent magnets located respectively in said two halves of said haptic transducer, produce a desired haptic effect; and
**characterized in that** the movable attachment is a swivel joint, slide joint, or elastically deforming joint.

11. A method according to claim 10, comprising:
- detecting a predetermined movement of a first part of the user device in relation to a second part thereof, and
- creating said current as a response to said detection.

12. A method according to claim 11, comprising:
- performing said detecting of a predetermined movement by detecting a current induced into said coil of the haptic transducer.

## Patentansprüche

1. Anordnung zum Erzeugen haptischer Effekte in einer Benutzervorrichtung, umfassend:
- einen ersten Teil der Benutzervorrichtung,
- einen zweiten Teil der Benutzervorrichtung, wobei der zweite Teil einen tragbaren Körper der Benutzervorrichtung bildet,
- eine bewegliche Anbringung zwischen dem ersten und dem zweiten Teil der Benutzervorrichtung, zum Ermöglichen, dass ein Benutzer der Benutzervorrichtung den zweiten Teil mit einer Hand hält und den ersten Teil in Bezug auf den zweiten Teil bewegt, während der Verwendung der Benutzervorrichtung, wobei die bewegliche Anbringung ein Drehgelenk, ein Schiebegelenk oder ein elastisch deformierbares Gelenk ist, und
- einen haptischen Wandler zum Erzeugen haptischer Effekte für den Benutzer während der Verwendung der Benutzervorrichtung,
wobei der haptische Wandler umfasst:
- eine erste Hälfte und eine zweite Hälfte,
- eine Anordnung von Permanentmagneten, von denen mindestens ein erster Permanentmagnet in der ersten Hälfte lokalisiert ist und mindestens ein zweiter Permanentmagnet in der zweiten Hälfte lokalisiert ist, und
- mindestens eine Spule, die in dem haptischen Wandler lokalisiert und dazu konfiguriert ist, unter Einfluss eines elektrischen Stroms, der durch die Spule fließt, dynamische magnetische Kräfte in dem haptischen Wandler zu erzeugen;
wobei die erste Hälfte an dem ersten Teil der Benutzervorrichtung angebracht ist und die zweite Hälfte an dem zweiten Teil der Benutzervorrichtung angebracht ist,
und die Anordnung umfasst:
- einen Detektor, der dazu konfiguriert, ein Detektionssignal zu erzeugen, als Antwort auf den Benutzer, der auf das erste Teil eine Kraft aufbringt, zum Bewegen des ersten Teils in Bezug auf das zweite Teil,
- eine steuerbare Treiberschaltung, zum Erzeugen des elektrischen Stroms zu der Spule als Antwort auf ein Steuersignal, und
- eine Steuerung, gekoppelt an den Detektor und die Treiberschaltung, wobei die Steuerung dazu konfiguriert ist, das Steuersignal in Antwort auf das Empfangen des Detektionssignals zu erzeugen; und
**dadurch gekennzeichnet, dass** die bewegliche Anbringung ein Drehgelenk, ein Schiebegelenk oder ein elastisch deformierbares Gelenk ist.

2. Anordnung nach Anspruch 1,
wobei der zweite Teil der Benutzervorrichtung eine Stromquelle zum Zuführen des elektrischen Stroms in die mindestens eine Spule umfasst.

3. Anordnung nach einem der Ansprüche 1 oder 2, wobei der erste und der zweite Teil und die bewegliche Anbringung dazu konfiguriert sind, dem Benutzer zu erlauben, den ersten Teil als einen Abzug zu benutzen, der mit einem Finger derselben Hand zu ziehen ist, die den zweiten Teil hält.

4. Anordnung nach einem der vorhergehenden Ansprüche, wobei der Detektor und der haptische Wandler unterschiedliche Bauteile sind.

5. Anordnung nach einem der Ansprüche 1 bis 3, wobei der haptische Wandler dazu konfiguriert ist, auch als der Detektor in Betrieb zu sein.

6. Anordnung nach Anspruch 5, umfassend eine elektrische Kopplung zwischen der Spule und der Steuerung, zum Ermöglichen, dass die Steuerung einen Strom detektiert, der in die Spule induziert wird, und diesen detektierten Strom als das Detektionssignal verwendet.

7. Anordnung nach einem der vorhergehenden Ansprüche, wobei:
- der erste Teil beweglich ist in Bezug auf den zweiten Teil zwischen einer freigegebenen Position und einer betriebenen Position,
- in der freigegebenen Position die erste und zweite Hälfte des haptischen Wandlers lokalisiert in einer ersten Distanz voneinander sind, und
- in der betriebenen Position die erste und zweite Hälfte des haptischen Wandlers lokalisiert in einer zweiten Distanz voneinander sind, wobei die zweite Distanz kleiner ist als die erste Distanz.

8. Anordnung nach einem der Ansprüche 1 bis 6, wobei:
- die bewegliche Anbringung ein Drehgelenk ist, das dazu konfiguriert ist, dem ersten Teil zu erlauben, um eine Drehachse in Bezug auf das zweite Teil zu rotieren,
- die erste und zweite Hälfte des haptischen Wandlers rotationssymmetrisch um eine gemeinsame Symmetrieachse sind und mit der Symmetrieachse übereinstimmend mit der Drehachse platziert sind,.

9. Anordnung nach einem der vorhergehenden Ansprüche, wobei:
- der erste Permanentmagnet und der zweite Permanentmagnet gleichnamige Magnetpole aufweisen, die in der Permanentmagnetanordnung einander zugewandt sind, und
- eine magnetische Abstoßung zwischen den gleichnamigen Magnetpolen in Abwesenheit einer beabsichtigten Gegenkraft, die durch den Benutzer verursacht ist, das erste Teil in eine freigegebene Position weg vom zweiten Teil drückt.

10. Verfahren zum Erzeugen haptischer Effekte in einer Benutzervorrichtung, umfassend einen ersten Teil, einen zweiten Teil, wobei der zweite Teil einen tragbaren Körper der Benutzervorrichtung bildet, und eine bewegliche Anbringung zwischen dem ersten und dem zweiten Teil der Benutzervorrichtung, zum Ermöglichen, dass ein Benutzer der Benutzervorrichtung, den zweiten Teil mit einer Hand hält und den ersten Teil in Bezug auf den zweiten Teil bewegt, während der Verwendung der Benutzervorrichtung, wobei das Verfahren umfasst:
Reagieren auf eine detektierte vorbestimmte Weise eines Benutzers, der die zwei Teile der Benutzervorrichtung relativ zueinander bewegt, durch Erzeugen eines Stromflusses durch eine Spule eines haptischen Wandlers der Benutzervorrichtung, wobei zwei Hälften des haptischen Wandlers an jeweils einem der zwei Teile der Benutzervorrichtung angebracht sind, so dass der Strom dynamische magnetische Kräfte erzeugt, die zusammen mit statischen magnetischen Kräften, die durch zwei Permanentmagneten erzeugt sind, die jeweils in den zwei Hälften des haptischen Wandlers lokalisiert sind, einen gewünschten haptischen Effekt erzeugen; und
**dadurch gekennzeichnet, dass** die bewegliche Anbringung ein Drehgelenk, ein Schiebegelenk oder ein elastisch deformierbares Gelenk ist.

11. Verfahren nach Anspruch 10, umfassend:
- Detektieren einer vorbestimmten Bewegung eines ersten Teils der Benutzervorrichtung in Bezug auf einen zweiten Teil davon, und
- Erzeugen des Stroms als Antwort auf die Detektion.

12. Verfahren nach Anspruch 11, umfassend:
- Durchführen des Detektierens einer vorbestimmten Bewegung durch Detektieren eines Stroms, der in die Spule des haptischen Wandlers induziert ist.

## Revendications

1. Agencement destiné à produire des effets haptiques dans un dispositif utilisateur, comprenant :
- une première partie du dispositif utilisateur,
- une seconde partie du dispositif utilisateur, laquelle seconde partie constitue un corps portatif du dispositif utilisateur,
- une fixation mobile entre lesdites première et seconde parties du dispositif utilisateur, pour permettre à un utilisateur du dispositif utilisateur de tenir la seconde partie à la main et déplacer la première partie par rapport à la seconde partie pendant l'utilisation du dispositif utilisateur, dans lequel ladite fixation mobile est une articulation pivotante, une articulation coulissante ou une articulation se déformant élastiquement, et
- un transducteur haptique destiné à produire des effets haptiques pour ledit utilisateur pendant ladite utilisation du dispositif utilisateur ;
dans lequel ledit transducteur haptique comprend :
- une première moitié et une seconde moitié,
- un agencement d'aimants permanents, dont au moins un premier aimant permanent est situé dans ladite première moitié et au moins un second aimant permanent est situé dans ladite seconde moitié, et
- au moins une bobine située dans ledit transducteur haptique et configurée pour créer, sous l'influence d'un courant électrique s'écoulant à travers ladite bobine, des forces magnétiques dynamiques dans ledit transducteur haptique ;
dans lequel ladite première moitié est fixée à ladite première partie du dispositif utilisateur et ladite seconde moitié est fixée à ladite seconde partie du dispositif utilisateur ;
et l'agencement comprend :
- un détecteur configuré pour produire un signal de détection en réponse à l'utilisateur appliquant à ladite première partie une force pour déplacer la première partie par rapport à la seconde partie,
- un circuit d'entraînement commandable pour générer ledit courant électrique vers ladite bobine en réponse à un signal de commande, et
- un moyen de commande couplé audit détecteur et audit circuit d'entraînement, ledit moyen de commande étant configuré pour produire ledit signal de commande en réponse à une réception dudit signal de détection ; et
**caractérisé en ce que** ladite fixation mobile est une articulation pivotante, une articulation coulissante ou une articulation se déformant élastiquement.

2. Agencement selon la revendication 1, dans lequel la seconde partie du dispositif utilisateur comprend une source de courant destinée à alimenter ledit courant électrique dans ladite au moins une bobine.

3. Agencement selon l'une quelconque des revendications 1 ou 2, dans lequel lesdites première et seconde parties et ladite fixation mobile sont configurées pour permettre audit utilisateur d'utiliser ladite première partie sous la forme d'une gâchette à tirer par un doigt de la même main qui tient la seconde partie.

4. Agencement selon l'une quelconque des revendications précédentes, dans lequel ledit détecteur et ledit transducteur haptique sont des éléments différents.

5. Agencement selon l'une quelconque des revendications 1 à 3, dans lequel ledit transducteur haptique est configuré pour fonctionner également en tant que ledit détecteur.

6. Agencement selon la revendication 5, comprenant un couplage électrique entre ladite bobine et ledit moyen de commande pour permettre audit moyen de commande de détecter un courant induit dans ladite bobine et d'utiliser un tel courant détecté en tant que ledit signal de détection.

7. Agencement selon l'une quelconque des revendications précédentes, dans lequel :
- ladite première partie est mobile par rapport à ladite seconde partie entre une position libérée et une position en fonctionnement,
- dans ladite position libérée les première et seconde moitiés du transducteur haptique sont situées à une première distance l'une de l'autre, et
- dans ladite position en fonctionnement lesdites première et seconde moitiés du transducteur haptique sont situées à une seconde distance l'une de l'autre, ladite seconde distance étant inférieure à ladite première distance.

8. Agencement selon l'une quelconque des revendications 1 à 6, dans lequel :
- ladite fixation mobile est une articulation pivotante configurée pour permettre à ladite première partie de tourner autour d'un axe de pivotement par rapport à ladite seconde partie,
- lesdites première et seconde moitiés du transducteur haptique sont symétriques en rotation autour d'un axe de symétrie commun et placées avec ledit axe de symétrie coïncident avec ledit axe de pivotement.

9. Agencement selon l'une quelconque des revendications précédentes, dans lequel :
- le premier aimant permanent et le second aimant permanent ont des pôles magnétiques désignés de manière similaire en regard l'un de l'autre dans l'agencement d'aimants permanents, et
- une répulsion magnétique entre lesdits pôles magnétiques désignés de manière similaire, en l'absence d'une quelconque force de contre-action intentionnelle provoquée par l'utilisateur, pousse la première partie dans une position libérée à distance de la seconde partie.

10. Procédé destiné à produire des effets haptiques dans un dispositif utilisateur comprenant une première partie, une seconde partie, laquelle seconde partie constitue un corps portatif du dispositif utilisateur, et une fixation mobile entre lesdites première et seconde parties du dispositif utilisateur pour permettre à un utilisateur du dispositif utilisateur de tenir la seconde partie à la main et déplacer la première partie par rapport à la seconde partie pendant l'utilisation du dispositif utilisateur, le procédé comprenant :
- répondre à une façon prédéterminée détectée d'un utilisateur déplaçant les deux parties du dispositif utilisateur l'une par rapport à l'autre, en faisant s'écouler un courant à travers une bobine d'un transducteur haptique du dispositif utilisateur, deux moitiés du transducteur haptique étant fixées aux moitiés respectives desdites deux parties du dispositif utilisateur, de sorte que ledit courant crée des forces magnétiques dynamiques qui, conjointement avec des forces magnétiques statiques créées par deux aimants permanents situés respectivement dans lesdites deux moitiés dudit transducteur haptique, produisent un effet haptique souhaité ; et
**caractérisé en ce que** la fixation mobile est une articulation pivotante, une articulation coulissante ou une articulation se déformant élastiquement.

11. Procédé selon la revendication 10, comprenant :
- détecter un mouvement prédéterminé d'une première partie du dispositif utilisateur par rapport à une seconde partie de celui-ci, et
- créer ledit courant en réponse à ladite détection.

12. Procédé selon la revendication 11, comprenant :
- mettre en oeuvre ladite détection d'un mouvement prédéterminé en détectant un courant induit dans ladite bobine du transducteur haptique.
